# EUROPEAN PATENT APPLICATION

(11) **EP 4 516 597 A1**
(43) Date of publication of application: **05.03.2025**
(21) Application number: 23795041.5
(22) Date of filing: 13.04.2023
(51) Int. Cl.: B60R 19/26

(54) **BUMPER BRACKET, VEHICLE BODY FRONT END ASSEMBLY, AND VEHICLE**

(30) Priority: 29.04.2022 CN 202221030836 U
(71) Applicant: BYD Company Limited, Shenzhen, Guangdong 518118 (CN)
(72) Inventor: LIN, Yongrui, Shenzhen, Guangdong 518118 (CN); SUN, Bo, Shenzhen, Guangdong 518118 (CN); LIANG, Zhiguang, Shenzhen, Guangdong 518118 (CN); CHEN, Liang, Shenzhen, Guangdong 518118 (CN); ZHU, Chao, Shenzhen, Guangdong 518118 (CN)
(74) Representative: Mathys & Squire
(86) International application number: PCT/CN2023/088009
(87) International publication number: WO 2023/207608

(57) **Abstract**

A bumper bracket (2). The bumper bracket is provided with a mounting hole (22) and a weakened portion (21). The mounting hole is used for achieving connection between the bumper bracket and a vehicle body module (3). **In** the front-to-rear direction of a vehicle, the weakened portion is arranged in front of the mounting hole, the projection of the mounting hole in the front-to-rear direction of the vehicle and the projection of the weakened portion in the front-to-rear direction of the vehicle at least partially overlap, and the structural strength of the weakened portion is less than the structural strength of the bumper bracket.

## Description

### CROSS-REFERENCE TO RELATED APPLICATIONS

The present disclosure is based on and claims priority to Chinese Patent Application No.202221030836.2, "BUMPER BRACKET, VEHICLE BODY FRONT END ASSEMBLY, AND VEHICLE" filed on April 29,2022, which is incorporated herein by reference in its entirety.

### FIELD

The present disclosure relates to the technical field of bumper brackets, and in particular to a bumper bracket, a vehicle body front end assembly and a vehicle.

### BACKGROUND

With the number of the vehicle increasing rapidly, vehicle safety is also receiving more and more attention. When a front collision occurs between a pedestrian and a vehicle, it is usually a front bumper of the vehicle that makes direct contact with the body of the pedestrian. However, the existing bumper of the vehicle is generally mounted to the vehicle body through a sheet metal bracket and a non-retractable plastic bracket. The deformation of the sheet metal bracket and the non-retractable plastic bracket is limited and cannot effectively crumple and absorb energy to form a buffer effect.

In the prior art, the buffer deformation capability of the bumper is improved by adding an elastic buffer part, an airbag and the like. Although this method can realize the crumple of the bumper, but the number of parts required in this method is large, and at the same time, a secondary damage to the pedestrian impact will be increased due to a recovery deformation of the elastic part after elastic deformation.

### SUMMARY

The present disclosure is intended to resolve one of technical problems in the above technologies at least to some extent.

To this end, according to a first aspect of the present disclosure is to provide a bumper bracket. The bumper bracket is configured to be connected to a vehicle body, the bumper bracket is provided with a mounting hole and a weakening portion, and the mounting hole is configured to connect the bumper bracket to the vehicle body. In a front-rear direction of a vehicle, the weakening portion is arranged in front of the mounting hole, a projection of the mounting hole in the front-rear direction of the vehicle at least partially overlaps a projection of the weakening portion in the front-rear direction of the vehicle, and a structural strength of the weakening portion is lower than a structural strength of the bumper bracket.

In an embodiment, a connecting portion is provided between the mounting hole and the weakening portion, the connecting portion is configured to space the mounting hole from the weakening portion, and a width of the connecting portion is inversely proportional to a crumple capability of the bumper bracket.

In an embodiment, the weakening portion is strip-shaped, and an included angle between an extension direction of the weakening portion and a front-rear direction of the vehicle is inversely proportional to a crumple capacity of the bumper bracket.

In an embodiment, a thickness of the weakening portion is less than a thickness of the connecting portion.

In an embodiment, a thickness of the weakening portion is zero, and a shape of the weakening portion is one of a rectangle, a trapezoid, an ellipse, a rhombus, a triangle, a hexagon, or a triangle.

In an embodiment, a side wall of the weakening portion is a flat surface or a curved surface.

In an embodiment, the weakening portion is integrally formed with the bumper bracket.

In an embodiment, a plurality of front and rear adjacent weakening portions are provided in front of the mounting hole.

According to a second aspect of the present disclosure is to provide a vehicle body front end assembly. The vehicle body front end assembly includes a bumper, a body, a fastener, and the aforementioned bumper bracket, the bumper is fixedly connected to a front end of the bumper bracket, and the fastener is configured to pass through the mounting hole to connect the bumper bracket to the vehicle body and to move from the mounting hole to the weakening portion when an external force applied to the bumper bracket is greater than a preset value.

According to a third aspect of the present disclosure is provided a vehicle including the aforementioned vehicle body front end assembly or the aforementioned bumper bracket.

Compared to the prior art, the present disclosure has the following beneficial technical effects:

According to the present disclosure, the weakening portion is provided on the bumper bracket, when the vehicle collides with a pedestrian, the bumper bracket is subjected to an acting force toward the rear of the vehicle, and the fastener moves from the mounting hole to the weakening portion. Due to the fact that the strength of the weakening portion is weak, the weakening portion is more easily to plastic deform and the front bumper may move toward the rear of the vehicle as a whole, so that secondary damage to pedestrian caused by recovery of deformation after the deformation is prevented, thereby reducing the damage to the pedestrian and improving the buffering deformation capability of the vehicle bumper system.

### BRIEF DESCRIPTION OF THE DRAWINGS

FIG.1 is a schematic structural diagram illustrating a bumper bracket according to an embodiment of the present disclosure;
FIG.2 is an enlarged view at B of the bumper bracket shown in FIG. 1;
FIG.3 is a schematic cross-sectional view at A-A of the bumper bracket shown in FIG. 1;
FIG.4 is a schematic structural diagram of a mounting structure of a bumper bracket according to an embodiment of the present disclosure;
FIG.5 is a schematic structural diagram of a vehicle body front end assembly according to an embodiment of the present disclosure;
FIG.6 is a schematic diagram of a vehicle according to an embodiment of the present disclosure;

1-Bumper, 2 -Bumper bracket, 21-Weakening portion, 211-Front groove wall, 212-Rear groove wall, 213-Left groove wall, 214-Right groove wall, 22-Mounting hole, 23-Connecting portion, 3-Vehicle body, 4-Fastener, 10-Vehicle body front end assembly, 100-Vehicle.

### DETAILED DESCRIPTION

The embodiments of the present disclosure are described below in derear. Examples of the embodiments are shown in the accompanying drawings, and same or similar reference signs in all the accompanying drawings indicate same or similar components or components having same or similar functions. The embodiments described below with reference to the accompanying drawings are exemplary, are intended to explain the present disclosure and cannot be construed as a limitation on the present disclosure.

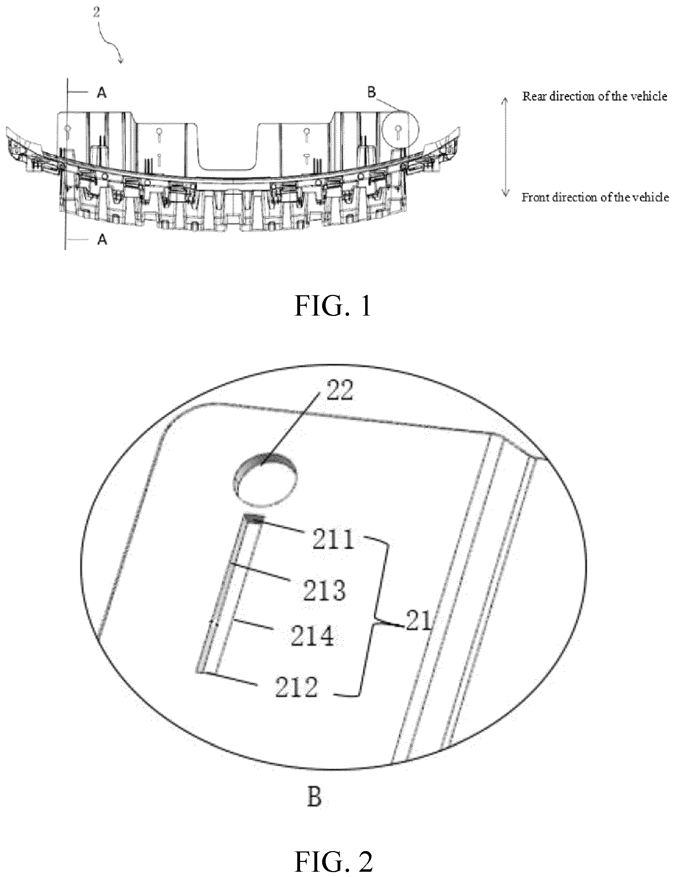

As shown in FIG.1 to FIG.5, in an embodiment of the present disclosure, a bumper bracket 2 is provided, and the bumper bracket 2 is provided with a mounting hole 22 and a weakening portion 21. The mounting hole 22 is configured to connect the bumper bracket 2 and a vehicle body 3. In a front-rear direction of a vehicle, the weakening portion 21 is provided in front of the mounting hole 22, a projection of the mounting hole 22 in the front-rear direction of the vehicle and a projection of the weakening portion 21 in the front-rear direction of the vehicle at least partially overlap, and a structural strength of the weakening portion 21 is lower than a structural strength of the bumper bracket 2.

The bumper bracket 2 in the above embodiment is mainly used to install a bumper 1 of the vehicle 100 on the vehicle body. The bumper bracket 2 includes a front end and a rear end. The front end of the bumper bracket 2 refers to an end of the bumper bracket 2 facing a head of the vehicle in a normal usage state, and the rear end of the bumper bracket 2 refers to an end of the bumper bracket 2 facing a rear of the vehicle in a normal usage state. One end of the bumper bracket 2 facing the head of the vehicle is connected to the bumper 1, and one end facing the rear of the vehicle is connected to the vehicle body 3.

In the above embodiment, the vehicle body 3 refers to some components disposed in the vehicle 100, which may include, but is not limited to, one or more of a radiator, a condenser, an intercooler, a lamp assembly, an air guide system, and the like.

In the above embodiment, the front-rear direction of the vehicle refers to the length direction of the body, such as in FIG. 1, the front direction of the vehicle points to the rear direction of the vehicle or the rear direction of the vehicle points to the front direction of the vehicle, and the direction toward the head is defined as front, and the direction toward the rear is defined as rear.

As shown in FIG. 1, in an embodiment of the present disclosure, the weakening portion 21 and the mounting hole 22 are matched in pairs. The rear end of the bumper bracket 2 is provided with two mounting holes 22 for connecting with the vehicle body 3, and the front of each mounting hole 22 is provided with one weakening portion 21.

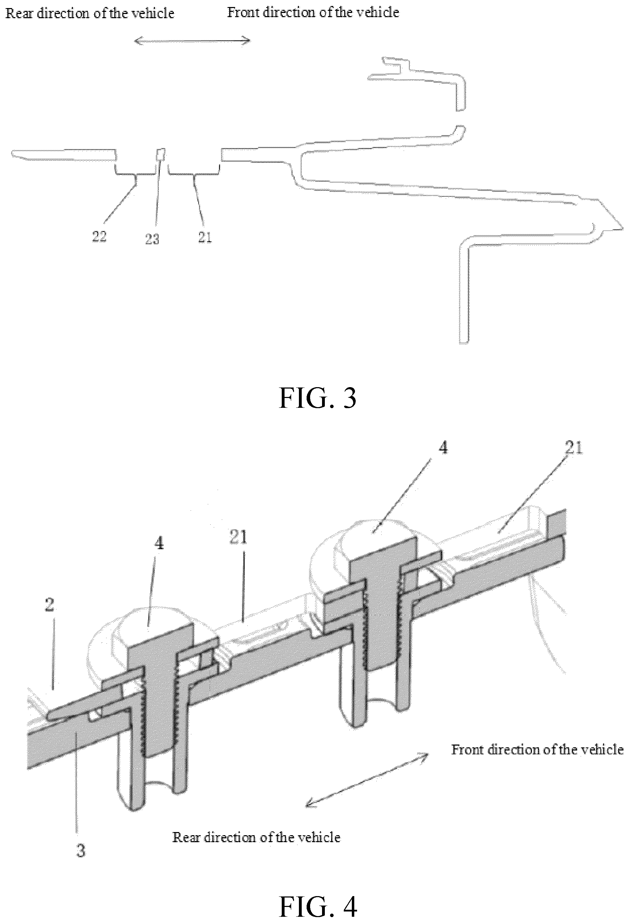

In actual use, as shown in FIG.4, the front end of the bumper bracket 2 is fixedly connected to the bumper 1 through a plurality of screws. At least one mounting hole 22 is provided at the rear end of the bumper bracket 2, and a fastener 4 such as a bolt passes through the mounting hole 22 and is fixed at a corresponding position of the front lower portion of the vehicle body 3, so as to connect the bumper bracket 2 and the vehicle body 3.

The projection of the mounting hole 22 in the front-rear direction of the vehicle and the projection of the weakened portion 21 in the front-rear direction of the vehicle at least partially overlap. Specifically, the projection of the mounting hole 22 in the front-rear direction of the bumper bracket 2 is a first projection (not shown), the projection of the weakening portion 21 in the front-rear direction of the bumper bracket 2 is a second projection (not shown), and the first projection and the second projection completely overlap, or at least a part of the first projection and the second projection overlap.

The structural strength of the weakening portion 21 is lower than the structural strength of the bumper bracket 2. Specifically, in order to achieve that the strength of the weakening portion 21 is lower than the strength of the bumper bracket 2, in an embodiment of the present disclosure, the weakening portion 21 may be provided in the form of a hollowed weakening groove, or the material thickness in the area of the weakening portion 21 may be reduced, or a material with relatively weak structural strength may be used at the weakening portion 21, of course, other common arrangement methods may also be used, which are not limited herein, as long as the structural strength of the area of the weakening portion 21 on the bumper bracket 2 is relatively low and is easy to deform.

In the above embodiment, by providing the weakening portion 21, a buffering deformation capability of the bumper 1 system of the vehicle 100 is improved. A specific principle is as follows: in a normal usage state, the vehicle body 3 is mounted at the mounting hole 22 at the rear end of the bracket by using the fastener 4 such as a bolt, and the vehicle body 3 is fixed on the vehicle frame. When the vehicle 100 collides with the pedestrian, the bumper bracket 2 is subjected to an acting force toward the rear of the vehicle, the acting force is transmitted to the vehicle body 3 through the fastener, and the vehicle body 3 is fixedly connected with the vehicle frame, so that the vehicle body 3 transmits a reaction force (the direction of the reaction force is from the rear of the vehicle to the front of the vehicle) to the bumper bracket 2 through the fastener 4. Since the structural strength of the weakening portion 21 is lower than a normal structural strength of the bumper bracket 2, the weakening portion 21 is more easily to plastic deform than other areas of the bumper bracket 2, so as to achieve an effect of energy absorption. The projection of the mounting hole 22 and the weakening portion 21 in the front-rear direction of the vehicle of the bumper bracket 2 are overlapped, so that after the collision occurs, the fastener 4 will move from the mounting hole 22 to the weakening portion 21, and the bumper bracket 2 will move toward the rear of the vehicle, so as to further move the front bumper 1 as a whole toward the rear of the vehicle, thereby preventing secondary damage to the pedestrian caused by recovery of deformation after the weakening portion 21 is deformed.

As shown in FIG.2 and FIG.3, in an embodiment of the present disclosure, a connecting portion 23 is provided between the mounting hole 22 and the weakening portion 21, the connecting portion 23 is configured to space the mounting hole 22 from the weakening portion 21, and a width of the connecting portion 23 is inversely proportional to a crumple capability of the bumper bracket 2.

In the above embodiment, for convenience of description, a rib between the weakening portion 21 and the mounting hole 22 is referred to as the connecting portion 23, and the width of the connecting portion 23 will affect the crumple degree generated during impact.

The crumple capacity refers to the ease with which the bumper bracket causes a crumple. Specifically, the bumper bracket is easy to crumple, which is called as a large crumple capacity, and the bumper bracket is difficult to crumple, which is called as a small crumple capacity.

When the width of the connecting portion 23 is relatively large, that is, the distance between the weakening portion 21 and the bolt mounting hole 22 is relatively far, the connecting rib between the weakening portion 21 and the bolt mounting hole 22 is relatively wide, and the connecting portion 23 can be disconnected only when a relatively large impact force is generated. That is, the bumper bracket 2 can be crumpled only when the bumper 1 is subjected to a relatively large impact, and the bumper is not easy to crumple, so that the crumple capacity is small. Conversely, when the width of the connecting portion 23 is relatively small, that is, the distance between the weakening portion 21 and the bolt mounting hole 22 is relatively close, the connecting rib between the weakening portion 21 and the bolt mounting hole 22 is relatively narrow, and the connecting portion 23 can be disconnected only by a relatively small impact force. That is, the bumper bracket 2 can be crumpled when the bumper 1 is subjected to a relatively small impact, and the bumper is easy to crumple, so that the crumple capacity is large.

In actual use, the width of the connecting portion 23 may be set according to the requirement on the crumple capability. The length of the weakening portion 21 is as long as possible when the space is sufficient, so as to generate a larger degree of crumple deformation.

In addition, it can be understood that, when the width of the weakening portion 21 is greater than the diameter of the fastener 4, after the fastener 4 breaks the connecting portion 23 between the mounting hole 22 and the weakening portion 21, the fastener 4 can smoothly enter the weakening portion 21 by only a small impact force, so that the crumple may easily generate and the crumple capability is large. When the width of the weakening portion 21 is less than the diameter of the fastener 4, after the fastener 4 breaks the connecting portion 23 between the mounting hole 22 and the weakening portion 21, a large impact force is required for the fastener 4 to deform the weakening portion 21 and cause crumple, and the crumple capability is small. Therefore, the specific width of the weakening portion 21 may be adjusted according to the requirement for the crumple capability.

In addition, it can be understood that, the material thickness at the edge of the weakening portion 21 may also affect the crumple degree. When the material thickness of the product is relatively small, the crumple can be generated after a relatively small impact force is generated. When the material thickness of the product is relatively large, a relatively large impact force is required for generating the crumple. The specific material thickness of the product may be adjusted according to requirements.

As shown in FIG.2 and FIG.3, in an embodiment of the present disclosure, the weakening portion 21 is strip-shaped, and an included angle between an extension direction of the weakening portion 21 and a front-rear direction of the vehicle is inversely proportional to the crumple capacity of the bumper bracket.

In the above embodiment, the weakening portion 21 is provided in a strip shape. When the weakening portion 21 is at an angle with the front-rear direction of the vehicle, a component force is required to be generated by the force generated after the impact to break the connecting portion 23 between the weakening portion 21 and the mounting hole 22, so that the crumple can be generated only after a large impact force is generated. Therefore, during actual use, the extending direction of the weakening portion 21 may be adjusted according to the requirement. When it is necessary to make the bumper bracket 2 have a relatively large crumple capability, the included angle between the weakening portion 21 and the first direction may be reduced, and when it is necessary to make the bumper bracket 2 have a relatively small crumple capability, the included angle between the weakening portion 21 and the first direction may be increased.

As shown in FIG. 1, in an embodiment of the present disclosure, the extension direction of the weakening portion 21 is parallel to the front-rear direction of the vehicle.

In an embodiment of the present disclosure, the thickness of the weakening portion 21 is less than t thickness of the connecting portion 23.

The above embodiment provides a specific manner of providing the weakening portion 21. Specifically, the thickness of the weakening portion 21 may be set to zero, that is, the weakening portion 21 may be provided as a weakening groove. Of course, it is also possible to reduce the material thickness of the weakening portion 21, and ultimately achieve the effect that the structural strength of the weakening portion 21 is lower than the structural strength of other areas of the bumper bracket 2.

Regarding the shape setting of the weakening portion 21, in actual use, the weakening portion 21 may be set to be in a conventional shape such as an ellipse, a diamond, a trapezoid, a triangle, or a hexagonal structure, or may be set to be in any other unconventional shape.

In an embodiment of the present disclosure, the weakening portion 21 is configured as a weakening groove, and the weakening groove is rectangular or trapezoidal.

In an embodiment of the present disclosure, a side wall of the weakening portion 21 is a plane or a curved surface.

The above embodiment provides a specific shape of the weakening portion 21. That is, the weakening portion 21 is configured as a weakening groove, and the weakening groove is integrally a rectangular hole or a trapezoidal hole, including a front groove wall 211, a rear groove wall 212, a left groove wall 213 and a right groove wall 214, and the four groove walls jointly define the weakening groove. The four groove walls of the weakening groove may be set as a plane or a curved surface, the left groove wall 213 and the right groove wall 214 can also be arranged as staggered curved surfaces when required, and the connections of the four groove walls may be rounded according to the requirements. Under the condition that the strength requirement of the mounting bracket of the bumper 1 is met, the size of the width, the length and the thickness of the weakening groove may be flexibly adjusted according to different shapes of the bumper 1, force failure requirements and the like, so as to adjust the crumple degree and deformation degree.

The weakening portion 21 may be formed in a plurality of manners, for example, the weakening portion 21 may be formed by removing material, or may be formed in other common manners.

In an embodiment of the present disclosure, the weakening portion 21 and the bracket 2 are formed by integral injection molding, the number of components is small, and there is no need to add buffer components. The bumper 1 assembly is simple in structure, the assembly is reduced, and the cost is relatively low.

In an embodiment of the present disclosure, as shown in FIG.4, a plurality of adjacent weakening portions 21 are provided in front of the mounting hole 22, and the plurality of adjacent weakening portions 21 are arranged along the front-rear direction of the vehicle. The center line of the weakening portion 21 and the center line of the mounting hole 22 are arranged in the same direction, the arrangement position of the weakening portion 21 is flexible, and the weakening portion 21 may be arranged at a place where a breakage is expected when a collision occurs.

The connecting portion 23 may be provided between a plurality of adjacent weakening portions 21, and when the vehicle 100 is subjected to a small impact force, only the weakening portion 21 closest to the mounting hole 22 may be deformed, resulting in a small crumple degree. In this case, it needs only to readjust the position of the bumper 1 to the initial position and retighten the fastener 4 at the mounting hole 22, without directly replacing the bracket.

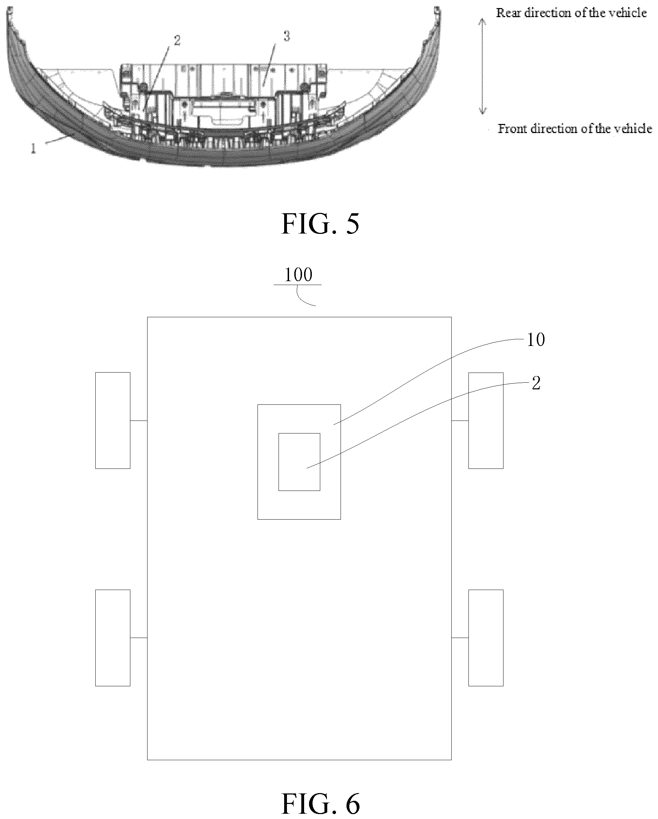

As shown in FIG.4 and FIG.5, another embodiment of the present disclosure provides a vehicle body front end assembly 10. The vehicle body front end assembly 10 includes a bumper 1, a vehicle body 3, a fastener 4 and the aforementioned bumper bracket 2. The bumper 1 is fixedly connected to the front end of the bumper bracket 2, and the fastener 4 is configured to pass through the mounting hole 22 to connect the vehicle body 3. When an external force applied to the bumper bracket 2 is greater than a preset value, the fastener 4 moves from the mounting hole 22 to the weakening portion 21.

In the above embodiment, the fastener 4 may be a hexagonal head bolt and flat washer assembly, a hexagonal flange face bolt, a flat washer assembly, a hexagonal flange face bolt and flat washer assembly, a spring washer and flat washer assembly, or the like.

The upper portion of the bumper 1 may be connected to the bumper bracket 2 through a plurality of screws, the left and right sides of the bumper bracket 2 are connected to a front combined lamp and a fender in a manner of snap, and the lower portion of the bumper bracket 2 is fixed to the front lower portion of the vehicle body 3 through bolts.

The front bumper bracket 2 may stably support parts such as the bumper 1, a grille upper cover plate and a decoration of the front bumper 1, and may also provide a center penetrating lamp mounting point for the vehicle 100 equipped with the center penetrating lamp, and stably support the center penetrating lamp.

When a front collision occurs to a pedestrian, the front hatch cover and the front bumper 1 are subjected to an impact force, wherein after the acting force is transmitted to the front bumper 1, the force is transmitted to the bumper bracket 2. Because the weakening portion 21 is arranged in the front direction of the mounting holes 22 of the bumper bracket 2 and the vehicle body 3, and the structural strength of the weakening portion 21 is lower than the structural strength of the bracket 2, therefore, the weakening portion 21 will be preferentially deformed, so that the bumper bracket 2 will be crumpled along the front-rear direction of the vehicle, the energy generated by impact will be absorbed, the reaction force on the pedestrian will be reduced, so as to achieve the role of pedestrian protection. Each weakening portion 21 during crumple is equivalent to forming a cavity between the bumper 1 (collision point) and the mounting hole 22 (rigid fixation point) to buffer and absorb energy.

In addition, in the above embodiment, when a slight collision occurs, the fastener 4 on the bumper bracket 2 of the vehicle 100 may be loosened, the position of the front bumper 1 may be adjusted, and then the fastener 4 may be tightened, so that the cost for replacing the front bumper 1 due to the damage of the front bumper 1 is reduced.

In addition, in the above embodiment, there is also a frictional force between the fastener 4 and the bumper bracket 2 after the fastener 4 is tightened, and the frictional force between the fastener 4 and the bumper bracket 2 may counteract the impact force which is generated by a slighter collision. So that when the force is generated by a slighter collision, the damage to the body structure of the vehicle 100 is smaller, and the vehicle 100 may be maintained and adjusted more conveniently, so as to reduce the maintenance cost and maintenance time of the vehicle 100.

In actual use, the distance between the weakening portion 21 and the mounting hole 22 may be set according to the requirement for the crumple capacity of the bumper bracket 2. When it is desired that the bumper bracket 2 crumples only in the case of a violent collision of the vehicle 100, the distance between the mounting hole 22 and the weakening portion 21 may be set to be relatively long. When it is desired that the bumper bracket 2 crumples in the case of a slight collision of the vehicle 100, the distance between the mounting hole 22 and the weakening portion 21 may be set to be relatively short. The distance between the mounting hole 22 and the weakening portion 21 is proportional to a preset value of the external force.

According to a third aspect of the present disclosure, a vehicle 100 is provided, as shown in FIG.6, the vehicle 100 includes the aforementioned vehicle front end assembly 10.

In the description of the present disclosure, it should be understood that terms "center", "longitudinal", "transverse", "length", "width", "thickness", "above", "below", "front", "back", "left", "right", "vertical", "horizontal", "top", "bottom", "inner", "outer", "clockwise", "counterclockwise", etc. indicate azimuthal or positional relations based on those shown in the accompanying drawings only for ease of description of the present disclosure and for simplicity of description, and are not intended to indicate or imply that the referenced device or element must have a particular orientation and be constructed and operative in a particular orientation, and thus may not be construed as a limitation on the present disclosure.

In addition, terms "first" and "second" are used merely for the purpose of description, and shall not be construed as indicating or implying relative importance or implying a quantity of indicated technical features. Therefore, a feature restricted by "first" or "second" may explicitly indicate or implicitly include at least one of such features. In the descriptions of the present disclosure, unless explicitly specified, "multiple" means at least two, for example, two or three.

In the present disclosure, it should be noted that unless otherwise explicitly specified and limited, the terms "mount", "connect", "connection", and "fix" should be understood in a broad sense. For example, a connection may be a fixed connection, a detachable connection, or an integral connection; or the connection may be a mechanical connection or an electrical connection; or the connection may be a direct connection, an indirect connection through an intermediary, or internal communication between two elements or mutual action relationship between two elements, unless otherwise specified explicitly. A person of ordinary skill in the art can understand specific meanings of the terms in the present disclosure based on specific situations.

In the present disclosure, unless expressly specified and limited otherwise, the situation that a first feature is "above" or "below" a second feature may be that the first and second features are in direct contact, or may be that the first and second features are not in direct contact but are in contact by means of an another feature between them. Moreover, the situations that the first feature is "above", "at an upper portion of" and "at an upside of the second feature include the situations that the first feature is right above or obliquely above the second feature, or simply indicate that the first feature is at a higher level than the second feature. The situations that the first feature is "below", "at a lower portion of and "at an underside of" the second feature include the situations that the first feature is right below or obliquely below the second feature, or simply indicate that the first feature is at a lower level than the second feature.

In the description of this specification, the description of the reference terms "an embodiment", "some embodiments", "an example", "a specific example", "some examples", and the like means that specific features, structures, materials or characteristics described in combination with the embodiment(s) or example(s) are included in at least one embodiment or example of the present disclosure. In this specification, exemplary descriptions of the foregoing terms do not necessarily refer to the same embodiment or example. In addition, the described specific features, structures, materials, or characteristics may be combined in a proper manner in any one or more of the embodiments or examples. Furthermore, those skilled in the art may combine and combine different embodiments or examples described in this specification and features of different embodiments or examples without contradicting each other.

Although the embodiments of the present disclosure have been shown and described above, it can be understood that, the foregoing embodiments are exemplary and should not be understood as limitation to the present disclosure. A person of ordinary skill in the art can make changes, modifications, replacements, or variations to the foregoing embodiments within the scope of the present disclosure.

## Claims

1. A bumper bracket (2) for connecting with a vehicle body (3), wherein the bumper bracket (2) is provided with a mounting hole (22) and a weakening portion (21),
the mounting hole (22) is configured to connect the bumper bracket (2) and the vehicle body (3), and
in a front-rear direction of a vehicle, the weakening portion (21) is arranged in front of the mounting hole (22), a projection of the mounting hole (22) in the front-rear direction of the vehicle at least partially overlaps with a projection of the weakening portion (21) in the front-rear direction of the vehicle, and a structural strength of the weakening portion (21) is lower than a structural strength of the bumper bracket (2).

2. The bumper bracket (2) according to claim 1, wherein a connecting portion (23) is provided between the mounting hole (22) and the weakening portion (21), the connecting portion (23) is configured to space the mounting hole (22) from the weakening portion (21), and a width of the connecting portion (23) is inversely proportional to a crumple capacity of the bumper bracket (2).

3. The bumper bracket (2) according to claim 2, wherein the weakening portion (21) is strip-shaped, and an included angle between an extension direction of the weakening portion (21) and a front-rear direction of the vehicle is inversely proportional to a crumple capacity of the bumper bracket (2).

4. The bumper bracket (2) according to claim 3, wherein a thickness of the weakening portion (21) is less than a thickness of the connecting portion (23).

5. The bumper bracket (2) according to claim 4, wherein a thickness of the weakening portion (21) is zero, and a shape of the weakening portion (21) is one of a rectangle, a trapezoid, an ellipse, a diamond, a triangle, a hexagon, or a triangle.

6. The bumper bracket (2) according to any one of claims 1-5, wherein a side wall of the weakening portion (21) is a flat surface or a curved surface.

7. The bumper bracket (2) according to any one of claims 1-6, wherein the weakening portion (21) is integrally formed with the bumper bracket (2).

8. The bumper bracket (2) according to any one of claims 1-7, wherein a plurality of front and rear adjacent weakening portions (21) are provided in front of the mounting hole (22).

9. A vehicle body front end assembly (10) comprising a bumper (1), a vehicle body (3), a fastener (4), and the bumper bracket (2) according to any one of claims 1-8, the bumper (1) being fixedly connected to the bumper bracket (2), and the fastener (4) being configured to pass through the mounting hole (22) to connect the bumper bracket (2) to the vehicle body (3) and to move from the mounting hole (22) to the weakening portion (21) when an external force applied to the bumper bracket (2) is greater than a preset value.

10. A vehicle (100) comprising the vehicle body front end assembly (10) according to claim 9 or the bumper bracket (2) according to any one of claims 1-8.
